(19) Europäisches Patentamt

European Patent Office

Office européen des brevets

(11) **EP 0 775 897 B1**

(12) **EUROPÄISCHE PATENTSCHRIFT**

(45) Veröffentlichungstag und Bekanntmachung des Hinweises auf die Patenterteilung:
**19.02.2003 Patentblatt 2003/08**

(51) Int Cl.$^7$: **G01K 15/00**

(21) Anmeldenummer: **96250264.7**

(22) Anmeldetag: **21.11.1996**

(54) **Temperaturfühleranordnung**

Temperature sensing arrangement

Dispositif capteur de température

(84) Benannte Vertragsstaaten:
**DE FR GB IT**

(30) Priorität: **24.11.1995 DE 19545258**

(43) Veröffentlichungstag der Anmeldung:
**28.05.1997 Patentblatt 1997/22**

(60) Teilanmeldung:
**01250349.6 / 1 182 438**

(73) Patentinhaber: **ABB PATENT GmbH**
**68526 Ladenburg (DE)**

(72) Erfinder:
• **Huck, Ralf, Dr. rer. nat.**
**63457 Hanau (DE)**
• **Scheubel, Wolfgang, Dr. rer. nat.**
**63486 Bruchköbel (DE)**

(74) Vertreter: **Meissner, Peter E., Dipl.-Ing. et al**
**Meissner & Meissner,**
**Patentanwaltsbüro,**
**Hohenzollerndamm 89**
**14199 Berlin (DE)**

(56) Entgegenhaltungen:
**EP-A- 0 404 567       FR-A- 2 712 695**
**SU-A- 1 582 029**

**Beschreibung**

Die Erfindung betrifft eine Temperaturfühleranordnung mit mindestens einem Thermoelement und mindestens einem temperaturabhängigen Widerstand sowie einer damit elektrisch verbundenen Auswerteeinheit, wobei zumindest der temperaturabhängige Widerstand innerhalb eines Schutzrohres angeordnet ist.

In vielen Bereichen der industriellen Prozeß- und Meßtechnik wird für eine optimale Prozeßsteuerung eine genaue Kenntnis der Temperatur benötigt. Um die vielfältigen Einsatzmöglichkeiten von Temperaturfühlern abdecken zu können und darüber hinaus eine Eignung auch in der Reaktormeßtechnik sowie in chemischen Prozessen gewährleisten zu können, bedarf es der Erfüllung hoher Anforderungen. Diese Anforderungen sind robuster Aufbau, hohe Vibrations- und Temperaturschockbeständigkeit, sowie Unempfindlichkeit gegen chemisch aggressive Medien sowie ggf. gegen radioaktive Bestrahlung. Je nach Einsatzort müssen diese Bedingungen kumulativ erfüllt sein. Darüber hinaus sollten die Temperaturfühler noch eine hohe Meßgenauigkeit sowie eine hohe Reproduzierbarkeit über lange Zeitdauern aufweisen. In Erfüllung dieser Maßgaben sind die eigentlichen Temperaturfühler einer Temperaturfühleranordnung mechanisch sowie elektrisch einfach ausgebildet. Typisch für diese sogenannten Berührungsthermometer zur Temperaturmessung von Gasen oder Flüssigkeit ist ein einseitig geschlossenes Metallrohr, in dem ein Sensorelement hermetisch gekapselt angeordnet ist. Als Sensorelement dient dazu entweder ein Drahtmeßwiderstand, ein Schichtmeßwiderstand oder ein Thermoelement. Die Zuleitungsdrähte dieser Fühler sind zumeist mineralisolierte Metall-Leitungen, weil diese die o. g. Anforderungen gut erfüllen. Für Meßaufgaben, die eine genaue Temperaturbestimmung erfordern, werden hauptsächlich Widerstandsthermometer verwendet. Solche Widerstandsthermometer weisen eine sehr hohe Meßgenauigkeit sowie auch zeitlich gesehen eine hohe Reproduzierbarkeit auf, jedoch haben sie den Nachteil, daß sie gegenüber herkömmlichen Thermoelementen im Ansprechverhalten erheblich träger sind. Dies rührt hauptsächlich daher, daß ein Thermowiderstand, die Temperatur des Meßmediums aufgrund der höheren Masse und somit der höheren Wärmekapazität langsamer annimmt, als ein Thermoelement, bei dem nur die Thermokontaktstelle die Temperatur des Meßmediums annehmen muß. Somit sind Thermoelemente gegenüber Thermowiderständen erheblich flinker, wogegen der Thermowiderstand eine erheblich höhere Meßgenauigkeit aufweist. Die beiden Meßverfahren bzw. Meßelemente Thermowiderstand und Thermoelement haben die Eigenschaft unter Einwirkung von hohen Temperaturen bzw. Temperaturzyklen zu altem. D.h. sie verändern mit der Zeit ihre Kennlinie und damit die daraus abgeleitete Temperatur. Eine hohe Meßgenauigkeit kann daher nur sichergestellt werden, wenn die Genauigkeit der Fühler von Zeit zu Zeit durch eine Kalibrierung überprüft wird. Zu diesem Zweck muß der Fühler aus der Anlage ausgebaut werden.

Es gibt bekannte Temperaturfühleranordnungen, die durch Zusammenschaltung bzw. Zusammenverwendung von Thermoelementen und Thermowiderständen das flinke Ansprechverhalten der Thermoelemente und die hohe Meßgenauigkeit des Thermowiderstandes in Summe ausnutzen. Aus der DE 20 42 047 ist eine Temperaturmeßeinrichtung mit hoher Absolutgenauigkeit und großer Ansprechgeschwindigkeit bekannt, bei der die genannten beiden Eigenschaften durch gemeinsame Verwendung von Thermoelementen und Thermowiderstand vereint ist. Bei dieser bekannten Einrichtung ist ein Meßwiderstand vorgesehen, der in einer Umwandlung eines sogenannten Schutzrohres angeordnet ist. Des weiteren sind zwei Thermoelemente und ein Widerstandsthermometer innerhalb eines Schutzrohres vorgesehen. Dort sind die beiden Thermoelemente zur Differenzbildung gegeneinander geschaltet, und der dritte Temperaturfühler ist ein mechanisch stabiles Widerstandsthermometer. Die resultierende Temperaturanzeige T dieser Temperaturmeßeinrichtung setzt sich aus dem Temperaturmeßwert T(R) des Widerstandsthermometers und der Differenz der Meßwerte der beiden Thermoelemente $\Delta$ T(TH) zusammen.

$$T = T(R) + \Delta\ T(TH)$$

Die Differenz der Meßwerte der beiden Thermoelemente resultiert aus der Tatsache, daß zwei Thermoelemente im Ansprechverhalten niemals gleich sind. Die sich ergebende Differenz $\Delta$ **T(TH)** ist aber eine Funktion der Zeit, bis sich beide Meßwerte ausgeglichen haben. Beim Eintauchen einer derartigen Geberkombination in das Meßmedium ist die Ausgangsgröße der Temperaturmeßeinrichtung zunächst von dem Differenzmeßwert der Thermoelemente aufgrund der hohen Ansprechgeschwindigkeit des flinkeren Thermoelementes bestimmt. Das Differenzmeßsignal der Thermoelemente geht mit dem ansteigenden Meßwert des trägeren Thermoelementes gegen Null, während das Ausgangssignal des Widerstandsthermometers die Temperatur des Meßmediums abnimmt. Die Meßeinrichtung hat im ausgeglichenen Zustand nur noch den Fehler des Widerstandsthermometers, sie weist also eine hohe Absolutgenauigkeit auf. Dabei sind zwei Drähte zum Widerstandtemperaturfühler in das Schutzrohr hineingeführt, und die Thermoelemente sind gegeneinander geschaltet, miteinander verbunden, so daß für beide Thermoelemente zusammen nur zwei Drähte aus dem Schutzrohr herausgeführt werden. Dabei ist das eine Thermoelement in der Nähe des oberhalb der Meßspitze des Schutzrohres innerhalb desselben angeordnet und das zweite Thermoelement, nämlich das flinke Thermoelement ist dabei in der Meßspitze des Schutzrohres angeordnet. Eine solche räumliche Trennung ist hinsichtlich der Herstellung einer solchen Temperaturfühleranordnung erheblich aufwendig. Fernerhin findet hier eine galvanische Trennung der Thermoelemente vom Thermowiderstand statt, was zu gewissem Aufwand in der verarbeitenden Elektronik führt. Aus der DE 2 415 672 ist des weiteren eine Einrichtung zur Femmessung einer Temperatur angegeben, bei dem neben einem temperaturempfindlichen Widerstand auch ein Thermoelement verwendet wird. Am Meßort dieser Einrichtung ist der temperaturabhängige Widerstand in einen Zweig einer Meßbrücke eingebracht. Eine Meßdiagonale liegt in Reihe mit einem Thermoelement einerseits und der Primärwicklung eines Transformators andererseits. Die Kaltlötstelle des Thermoelementes und des temperaturempfindlichen Widerstandes der Brückenschaltung sind auf gleichem Temperatumiveau gehalten. Hier soll es, bei Verwendung einer Wechselstromquelle, zu einer gegenseitigen Kompensation von Abweichungen der Bezugsspannung, also der Spannung der Kaltlötstelle eines Thermoelementes kommen. Keines der genannten Dokumente geht auf die Überwachung der Absolutgenauigkeit des Fühlers ein.

Ausgehend von diesem genannten Stand der Technik liegt der Erfindung hinsichtlich einer Temperaturfühleranordnung die Aufgabe zugrunde, die kumulative Erfüllung der genannten Anforderungen an eine solche Einrichtung durch eine einfache und meßtechnisch zuverlässige und selbstüberwachende Weiterbildung zu realisieren.

Die gestellte Aufgabe wird hinsichtlich einer Temperaturfühleranordnung gemäß Oberbegriff des Patentanspruches 1 erfindungsgemäß dadurch gelöst, daß an beiden Anschlußdrähten des temperaturabhängigen Widerstandes jeweils ein Thermoelement elektrisch leitschlüssig angeordnet ist.

Weitere Ausgestaltungen der Temperaturfühleranordnung sind in den Ansprüchen 2 bis 5 angegeben.

Vorteilhaft ist hierbei, daß aufgrund der Anforderungen an die Meßtechnik hinsichtlich des Einsatzortes, und damit den Anforderungen des Explosionsschutzes genügend, die übliche Vierleiterschaltung im Effekt beibehalten wird. Hinsichtlich der Temperaturfühleranordnung werden sämtliche o. g. Anforderungen kumulativ erfüllt und die Anordnung ist dennoch erfindungsgemäß einfach. Das Gesamtsystem besteht in einem Ausführungsbeispiel aus einem temperaturabhängigen Widerstand, an dessen beiden Anschlußdrähten sich je ein Thermoelement elektrisch leitschlüssig befindet. Die beiden Thermoelemente sind entgegen dem zitierten Stand der Technik nicht mehr an wesentlich verschiedenen Orten untergebracht, sondern beide in der Nähe des temperaturabhängigen Widerstandes. Die erfindungsgemäße Temperaturfühleranordnung ist einfach und robust ausgestaltet, und bietet dennoch höchste Meßgenauigkeit unter Beibehaltung der Vierleiterschaltung.

Die Erfindung ist in der Zeichnung dargestellt und nachfolgend näher beschrieben.

Es zeigt die

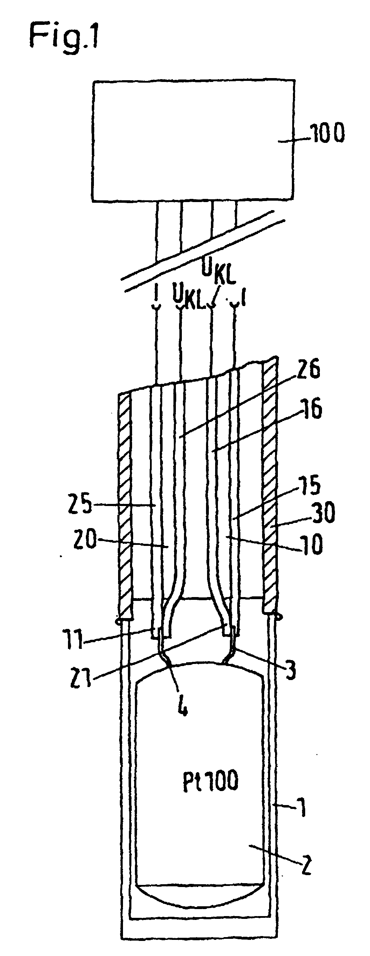

Figur 1 die erfindungsgemäße Temperaturfühleranordnung im Schnitt

Die Figur 1 zeigt die endungsgemäße Temperaturfühleranordnung im Längsschnitt. Innerhalb eines Schutzrohres 1 ist ein Thermowiderstand 2 in der Nähe der Meßspitze des Schutzrohres angeordnet. An das Schutzrohr 1 ist eine Metallmantelleitung 30 herangeführt und an demselben angeschweißt. Innerhalb der Metallmantelleitung 30 sind die vier Meßkabel 15, 16, 25, 26 angeordnet. Die Anschlußdrähte 3, 4 des Thermowiderstandes 2 sind dabei jeweils mit einem Thermoelement 10, 20 leitschlüssig verbunden. Dabei sind die Thermoelemente nicht an irgendeiner Stelle ihrer Schenkel mit den Anschlußdrähten des Thermowiderstandes verbunden, sondern die Meßspitze 11, 21 der Thermoelemente 10, 20 sind mit den Anschlußdrähten 3, 4 verbunden. In diesem Ausführungsbeispiel bestehen die äußeren Schenkel 15, 25 aus Nickeldrähten und die inneren Schenkel aus Nickel-Chrom-Drähten. Die nach außen geführten vier Drähte werden in den entsprechenden Meßphasen wie folgt beaufschlagt. In die äußeren, d.h. in diesem Ausführungsbeispiel in die Nikkeldrähte wird der Strom eingeprägt, der zur Widerstandsmessung des Thermowiderstandes in der entsprechenden Meßphase dient.
Dies ist vorteilhaft, weil die Nickeldrähte im Vergleich zu den Nickel-Chrom-Drähten einen kleineren spezifischen Widerstand aufweisen. Die Elektronik muß somit eine geringere Spannung bereitstellen und das Meßergebnis ist genauer.

Für den Spannungsabgriff wird hierbei nur identisches, also homogenes Drahtmaterial verwendet. Dies heißt, entweder jeweils nur der positive oder jeweils nur der negative Schenkel der beiden Thermoelemente. Dadurch wird erreicht, daß sich die Thermospannungen in den beiden identischen Schenkeln der Thermoelemente kompensieren und somit den Spannungsabfall am Widerstand nicht verfälschen. Wenn die Thermospannung gemessen werden soll, darf kein Strom von der Vierleiterauswertung des Widerstandes fließen. Daher werden Thermospannung und Widerstand nur separat, d. h. abwechselnd in der erfindungsgemäßen Weise erfaßt. Der Zuleitungswiderstand der Thermoelementendrähte geht bei der Vierleiterschaltung bekanntermaßen nicht in das Meßergebnis der Widerstandsmessung ein. Es empfiehlt sich jedoch, den Strom in die Nickelschenkel einzuprägen, da diese im Vergleich zu den Nickelchromschenkeln den kleineren spezifischen Widerstand haben, wie dies oben bereits ausgeführt ist.

## Patentansprüche

1. Temperaturfühleranordnung mit mindestens einem Thermoelement und mindestens einem temperaturabhängigen Widerstand sowie einer damit elektrisch verbundenen Auswerteeinheit, wobei zumindest der temperaturabhängige Widerstand innerhalb eines Schutzrohres angeordnet ist, **dadurch gekennzeichnet,** **daß** an beiden Anschlußdrähten (3, 4) des temperaturabhängigen Widerstandes (2) jeweils ein Thermoelement (10, 20) elektrisch leitschlüssig angeordnet ist.

2. Temperaturfühleranordnung nach Anspruch 1 **dadurch gekennzeichnet,** **daß** die Thermoelemente (10, 20) im Bereich der Thermopaarkontaktstelle (11, 21) an den Anschlußdrähten (3, 4) des Thermowiderstandes (2) elektrisch leitschlüssig befestigt sind.

3. Temperaturfühleranordnung nach Anspruch 2 **dadurch gekennzeichnet,** **daß** die Thermoelemente (10, 20) Nickelchrom-Nikkel-Thermoelemente sind.

4. Temperaturfühleranordnung nach einem oder mehreren der vorhergehenden Ansprüche 1 bis 3 **dadurch gekennzeichnet,** **daß** die Thermometeranordnung eine Elektronik (100) umfaßt, die mit den sich ergebenden 4 Thermoelementdrähten (15, 16, 25, 26) elektrisch und informationsschlüssig verbunden ist.

5. Temperaturfühleranordnung nach Anspruch 4 **dadurch gekennzeichnet,** **daß** die beiden jeweiligen positiven Schenkel der beiden Thermoelemente (10, 20) zum Stromabgriff, und die jeweiligen beiden negativen Schenkel der Thermoelemente zum Spannungsabgriff dienen.

## Claims

1. Temperature sensor arrangement with at least one thermocouple and at least one temperature-dependent resistor as well as an evaluation unit which is electrically connected thereto, wherein at least the temperature-dependent resistor is arranged inside a protective tube, **characterised in** **that** a respective thermocouple (10, 20) is arranged in electrically conductive fashion at both connecting wires (3, 4) of the temperature-dependent resistor (2).

2. Temperature sensor arrangement according to Claim 1,
**characterised in** **that** the thermocouples (10, 20) are fastened in electrically conductive fashion to the connecting wires (3, 4) of the thermoresistor (2) in the region of the thermocouple contact point (11, 21).

3. Temperature sensor arrangement according to Claim 2, **characterised in** **that** the thermocouples (10, 20) are nickel chromium-nickel thermocouples.

4. Temperature sensor arrangement according to one or more of the preceding Claims 1 to 3, **characterised in** **that** the thermometer arrangement comprises an electronic unit (100) which is connected to the resulting 4 thermocouple wires (15, 16, 25, 26) in electrically conductive and information-transmitting fashion.

5. Temperature sensor arrangement according to Claim 4, **characterised in** **that** the two respective positive limbs of the two thermocouples (10, 20) serve to tap current, and the two respective negative limbs of the thermocouples serve to tap voltage.

## Revendications

1. Dispositif capteur de température, comportant au moins un élément thermique et au moins une résistance dépendant de la température, ainsi qu'une unité d'exploitation reliée électriquement à celle-ci, au moins la résistance dépendant de la température étant agencée dans un tube de protection, **caractérisé en ce que**, sur les deux fils de raccordement (3, 4) de la résistance (2) dépendant de la température, un élément thermique (10, 20) est à chaque fois agencé de façon électriquement conductrice.

2. Dispositif capteur de température selon la revendication 1, **caractérisé en ce que** les éléments thermiques (10, 20) sont fixés de façon électriquement conductrice dans la zone du point de contact de la paire thermique (11, 21) aux fils de raccordement (3, 4) de la résistance thermique (2).

3. Dispositif capteur de température selon la revendication 2, **caractérisé en ce que** les éléments thermiques (10, 20) sont des éléments thermiques nickel chrome - nickel.

**4.** Dispositif capteur de température selon une ou plusieurs des revendications précédentes 1 à 3, **caractérisé en ce que** le dispositif capteur de température comporte une électronique (100) qui est reliée de façon électrique et informatique aux quatre fils des éléments thermiques (15, 16, 25, 26) existants.

**5.** Dispositif capteur de température selon la revendication 4, **caractérisé en ce que** les deux branches positives respectives des deux éléments thermiques (10, 20) servent à capter le courant, et les deux branches négatives respectives des éléments thermiques à capter la tension.

## Fig.1